# EUROPEAN PATENT APPLICATION

(11) **EP 3 525 097 A1**
(43) Date of publication of application: **14.08.2019**
(21) Application number: 18163999.8
(22) Date of filing: 26.03.2018
(51) Int. Cl.: G06F 9/50, G06F 9/48

(54) **METHOD AND SYSTEM FOR MIGRATING APPLICATIONS INTO CLOUD PLATFORMS**

(30) Priority: 09.02.2018 IN 201841005082
(71) Applicant: Wipro Limited, 560 035 Karnataka (IN)
(72) Inventor: BANERJEE, Bhaskar Jyoti, 711201 West Bengal (IN)
(74) Representative: Finnegan Europe LLP

(57) **Abstract**

The present disclosure discloses a method and system for migrating applications into cloud platforms. The cloud assessment system receives an application. The system identifies the feasibility of the application for migrating into a cloud platform of one or more cloud platforms, based on migration requirements. The migration requirements comprises at least one of compliance needs of the application, nature of the application, infrastructure characteristics for enforcing the application in the one or more cloud platforms and data needs of the application. Further, a target cloud platform is determined from the one or more cloud platforms, for the application based on one or more application parameters. Upon determining the target cloud platform, the application is migrated into the target cloud platform.

## Description

### TECHNICAL FIELD

The present subject matter is related, in general to cloud migration, and more particularly, but not exclusively to an automated system and method for migrating applications into cloud platforms.

### BACKGROUND

Cloud computing is a model for enabling ubiquitous, convenient, on-demand access to a shared pool of configurable computing resources. Cloud computing and other online services enable customers with various capabilities to store and process their data in third-party data centers. Cloud computing is a type of computing which relies on sharing computing resources to handle applications. The cloud, in general, is more efficient and requires fewer resources for computation, thus saving time and energy. Hence, predominantly most of the organizations rely on cloud computing to serve customers in a better and efficient way.

Cloud computing implementation of an application allows an organization to access the application through the Internet without knowledge of, expertise or control over the technology and infrastructure supporting the application. Cloud computing provides many benefits over traditional infrastructure models where computing equipment is owned or leased and housed in a server room, a data center, or a collocation site. The benefits of using cloud computing may be on-demand procurement of required computing resources, cost incurred in hosting the application in individual platforms is reduced, increased capability in terms of computation and storage, flexibility and application mobility. For example, applications may be provided that are accessible from a web browser, while the application and data are centrally stored.

However, cloud computing may add complexity over traditional infrastructure models in terms of regulation, compliance and controllability. Thereby, organizations have difficulty in identifying the cloud resources to be used, usage of the identified cloud resources, such that usage is consistent with technical, operational, and other needs of the organization. Thus, amenability of applications for migrating into cloud platforms is a problem faced by the organizations. The existing methods of assessment and tools provided by the cloud service providers are non-standard i.e. they do not provide a standard method complying to variations in the needs of the applications of different organizations, individuals etc. The existing technologies do not provide definitive decision-making process and mechanism to address the above-mentioned issue.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure relates to a method for migrating applications into cloud platforms. The method comprises receiving by a cloud assessment system, an application. Upon receiving the application, the method proceeds to identify feasibility of the application for migrating into a cloud platform of one or more cloud platforms, based on one or more migration requirements. The one or more migration requirements comprises at least one of compliance needs of the application, nature of the application, infrastructure characteristics for enforcing the application in the one or more cloud platforms and data needs of the application. Thereafter, the method comprises determining a target cloud platform from the one or more cloud platforms, for the application based on one or more application parameters. Lastly, the method comprises migrating the application into the target cloud platform.

In an embodiment, the present disclosure relates to a cloud assessment system for migrating applications into cloud platforms, the cloud assessment system comprises a processor and a memory, communicatively coupled with the processor, storing processor executable instructions, which, on execution causes the processor to receive an application. Further, the processor identifies feasibility of the application for migrating into a cloud platform of one or more cloud platforms, based on the one or more migration requirements. The one or more migration requirements comprises at least one of compliance needs of the application, nature of the application, infrastructure characteristics for enforcing the application in the one or more cloud platforms and data needs of the application. Thereafter, the processor determines a target cloud platform from the one or more cloud platforms, for the application based on one or more application parameters. Lastly, the processor migrates the application into the target cloud platform.

In an embodiment, the present disclosure relates to a non-transitory computer readable medium including instruction stored thereon that when processed by at least one processor cause a cloud assessment system to receive an application. The instruction may cause the processor to identify feasibility of the application for migrating into a cloud platform of one or more cloud platforms, based on migration requirements. The migration requirements comprises at least one of compliance needs of the application, nature of the application, infrastructure characteristics for enforcing the application in the one or more cloud platforms and data needs of the application. The instruction may cause the processor to determine a target cloud platform from the one or more cloud platforms, for the application based on one or more application parameters and migrate the application into the target cloud platform.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Figure 1** shows a block diagram illustrative of an environment for migrating applications into cloud platforms, in accordance with some embodiments of the present disclosure;
**Figure 2** shows an exemplary block diagram of a cloud assessment system for migrating applications into cloud platforms, in accordance with some embodiments of the present disclosure;
**Figure 3** shows an exemplary flow chart illustrating method steps for migrating applications into cloud platforms, in accordance with some embodiments of the present disclosure;
**Figure 4** shows a block diagram illustrating an application and target cloud for migrating applications into cloud platforms, in accordance with some embodiments of the present disclosure;
**Figure 5** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Embodiments of the present disclosure relate to method and system for migrating applications into cloud platforms. The cloud assessment system receives an application. The system identifies the feasibility of the application for migrating into a cloud platform among one or more cloud platforms, based on migration requirements. The migration requirements comprise at least one of compliance needs of the application, nature of the application, infrastructure characteristics for enforcing the application in the one or more cloud platforms and data needs of the application. Further, a target cloud platform is determined from the one or more cloud platforms for the application to be migrated, based on one or more application parameters. Upon determining the target cloud platform, the application is migrated into the target cloud platform.

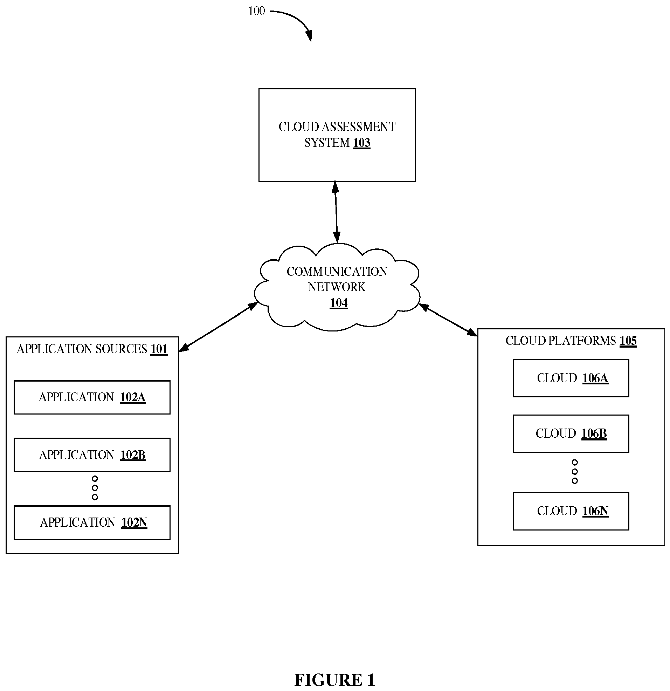

**Figure 1** shows a block diagram illustrative of an environment 100 for migrating applications into cloud platforms, in accordance with some embodiments of the present disclosure. The environment 100 comprises application sources 101, a cloud assessment system 103, a communication network 104 and cloud platforms 105. The application sources 101 may comprise of an application 102A, an application 102B, ....., an application 102N. The application 102A, the application 102B, ....., the application 102N may be collectively represented as one or more applications 102 hereafter in the present disclosure. In an embodiment the application sources 101 may be a database comprising the one or more applications 102 and details about each of the one or more applications 102. In another embodiment, the application sources 101 may be any device comprising the one or more applications 102. The one or more applications 102 may be provided as an input to the cloud assessment system 103 through the communication network 104. The communication network 104 communicatively connects the cloud assessment system 103 to the application sources 101 and the cloud platforms 105. The cloud assessment system 103 may retrieve an application from the one or more applications 102. The cloud assessment system 103 assesses the retrieved application based on one or more migration parameters, to determine feasibility of migrating into cloud platforms 105. Further, the cloud assessment system 103 generates a decision for migrating the application into the cloud platforms 105. The cloud platforms 105 comprises of a cloud 106A, a cloud 106B......., a cloud 106N. The cloud 106A, the cloud 106B......., the cloud 106N may be collectively represented as one or more clouds 106 hereafter in the present disclosure. The cloud assessment system 103 determines a target cloud of the one or more clouds 106 in the cloud platforms 105, based on one or more application parameters, for migrating the retrieved application. Upon determining the target cloud, the cloud assessment system 103 migrates the retrieved application into the target cloud via the communication network 104.

In an implementation, the cloud assessment system 103 may be configured in one or more user devices (not shown) used by one or more users. In an embodiment, the one or more users may be a person or a computing system. The one or more user devices may include, but are not limited to computing systems, such as a laptop, a computer, a desktop computer, a Personal Computer (PC), a notebook, a smartphone, a smart watch, a wearable device, a tablet, and e-book readers. A person skilled in the art would understand that the cloud assessment system 103 may be configured on any other device, not mentioned explicitly in the present disclosure.

In an implementation the application sources 101 may be connected to the cloud assessment system 103 via a wired or a wireless means.

In an embodiment, the cloud assessment system 103 may communicate with the application sources 101 and the cloud platforms 105 through the communication network 104. The cloud assessment system 103 may be disposed in communication with the communication network 104 via a network interface (not shown). The network interface may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network 104 may include, without limitation, a direct interconnection, wired connection, e-commerce network, a peer to peer (P2P) network, Local Area Network (LAN), Wide Area Network (WAN), wireless network (e.g., using Wireless Application Protocol (WAP)), the Internet, Wireless Fidelity (Wi-Fi), etc.

In an embodiment the cloud platforms 105 may comprise one or more clouds 106. The target cloud may be determined on the basis of one or more application parameters pertaining to each of the one or more applications. Each of the one or more clouds 106 may be associated with respective cloud parameters. The cloud parameters of each of the one or more clouds 106 defines the characteristics of each of the one or more clouds 106.

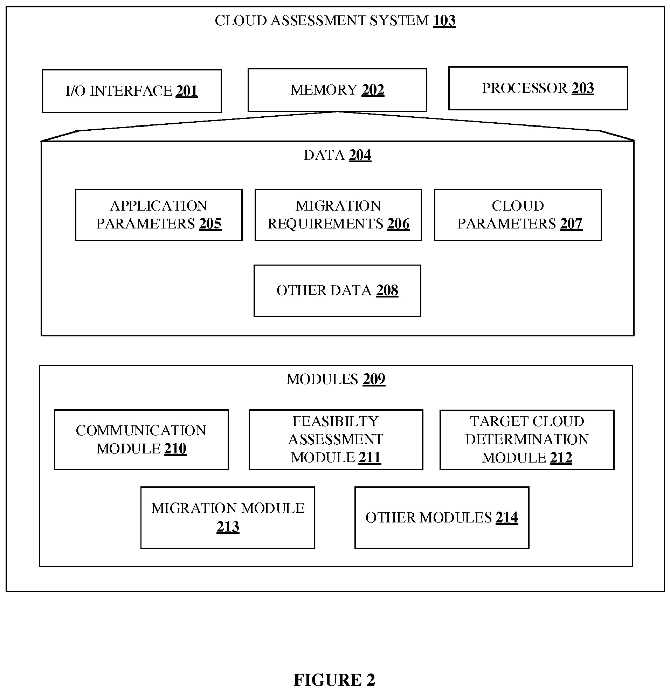

**Figure 2** shows an exemplary block diagram of a cloud assessment system 103 for migrating applications into cloud platforms 105, in accordance with some embodiments of the present disclosure. The cloud assessment system 103 may include at least one processor 203 and a memory 202 storing instructions executable by the at least one processor 203. The processor 203 may comprise at least one data processor for executing program components for executing user or system-generated requests. The memory 202 is communicatively coupled to the processor 203. The cloud assessment system 103 further comprises an Input/ Output (I/O) interface 201. The I/O interface 201 is coupled with the processor 203 through which an input signal or/and an output signal is communicated. In an embodiment, the I/O interface 201 couples the application sources 101 to the cloud assessment system 103.

In an embodiment, data 204 may be stored within the memory 202. The data 204 may include, for example, application parameters 205, migration requirements 206, cloud parameters 207 and other data 208.

In an embodiment, the application parameters 205 may refer to a list of parameters pertaining to each of the one or more applications 102. The list of parameters may include, but are not limited to, size of application, type of data processed by the application, data handling capability of the application, Operating System (OS) compatible with the application, functionalities and features of the application, architecture supported by the application, database supported by the application and the like.

In an embodiment, the one or more migration requirements taken into consideration for migrating each of the one or more applications 102 to the cloud platforms 105 may be referred as migration requirements 206. The migration requirements 206 may include, but are not limited to, at least one of compliance needs of the application, nature of the application, infrastructure characteristics for enforcing the application in the cloud platforms 105, data needs of the application and value of application.

In an embodiment, the compliance needs of the application may include, but are not limited to, data protection compliance, security compliance, possibility of achieving Recovery Time Objective (RTO) and Recovery Point Objective (RPO), and geo or location specific compliances. The data protection compliance refers to whether each of the one or more applications 102 complies to the protection of data. Security compliance refers to a list of security parameters to be complied by each of the one or more applications to be migrated to the cloud platforms 105. The cloud assessment system 103 checks whether each of the one or more applications 102 complies to security parameters, i.e. if each of the one or more applications 102 contains secret or secure data. RTO is a measure of how fast a system can recover from a failure, in case of any disaster. RPO is a measure of the amount of data that can be lost and the cloud assessment system 103 is still able to function, in case of any disaster. Possibility of achieving RTO and RPO refers to whether each of the one or more applications 102 is capable achieving a certain level of RTO and RPO. Geo or location specific compliances refers to a list of parameters specific to a geographical location. The cloud assessment system 103 examines whether each of the one or more applications 102 complies to a location specific parameter.

In an embodiment, the nature of the application may include one or more parameters specific to each of the one or more applications 102. The nature of application may include, but is not limited to statelessness, stickiness with other upstream and downstream applications, horizontal scalability, check for Commercial Off-the-Shelf (COTS) products, hardcoding, availability of support for hosting the application on the one or more cloud platforms, dependency on hardware components, multi-user usability, and changeability of architecture. Horizontal scalability is the ability to scale wider with increase in traffic. The cloud assessment system 103 examines each of the one or more applications 102 for horizontal scalability. Check for Commercial Off-the-Shelf (COTS) products refers to whether each of the one or more applications 102 is a COTS product. Statelessness may indicate the requirement of a server serving an application to retain session information or status about each communicating partner for the duration of multiple requests. Stickiness with other upstream and downstream applications refers to balancing the application load in order to achieve server-affinity. Stickiness with other upstream and downstream applications may also indicate if an application has upstream dependency or downstream dependency. Upstream dependency indicates if the application to be migrated has dependency with other applications/components. Downstream dependency indicates if other applications/ components has dependency on the application to be migrated. Dependency on hardware components refers to the amount of dependency of each of the one or more applications 102 on hardware components for functionality. Changeability of architecture indicates if each of the one or more applications permit change of respective architectures.

In an embodiment, the infrastructure characteristics for enforcing the application in the cloud platforms 105 may include, but are not limited to, Operating System (OS) support, database support, custom hardware, need for latency, storage Input/Output operations Per Second (IOPS) need, hardcoded Internet Protocol (IP) addressing and hardcoded authentication. OS support may refer to the OS supported by each of the one or more applications 102. Database support may refer to type of database supported by each of the one or more applications 102. Custom hardware may refer to the hardware requirements of each of the one or more applications 102.

In an embodiment, the data needs of the application may include, but are not limited to, amount of data and data flow direction, access of data from remote location and content delivery technology need. Access of data from remote location refers to the capability of accessing the data of each of the one or more applications 102 from a remote location. Content delivery technology refers to the need of Content Delivery Network (CDN) for each of the one or more applications 102. The cloud assessment system 103 examines if each of the one or more applications 102 requires a CDN network.

In an embodiment, the value of application, may refer to the cost incurred for migrating each of the one or more applications 102 into cloud platforms 105. Value of application may include, but is not limited to, an approximate benefit drawn from migration of each of the one or more applications into cloud platforms 105 and overall value incurred for migration of each of the one or applications 102.

In an embodiment, the cloud parameters 207 may comprise a list of parameters pertaining to each of the one or more clouds 106. Each of the one or more clouds 106 may be hosted by a respective cloud service provider or a cloud vendor. The cloud parameters 207 may include, but are not limited to, type of cloud services offered, pricing of cloud vendor, expertise of the cloud service provider, reliability of cloud vendor, financial stability of cloud vendor, terms and conditions of cloud vendor, ease of application hosting on the same platform, complexity of network connection and maintenance, cloud exchange possibility, restriction of cloud vendor to communicate with other cloud vendor and the like. The type of cloud services offered may be one of Software as a Service (SaaS), Platform as a Service (PaaS) and Infrastructure as a Service (IaaS). The cloud service provider may provide either one of the cloud services or a combination of the cloud services. Expertise of the cloud service provider may refer to the experience of the cloud service provider and whether the cloud service provider is an industry expert and is an established brand that is familiar with almost any software that an organization wants to use. Pricing of the cloud vendor refers to the flexibility of the cloud vendor in terms of pricing. Financial stability of the cloud vendor refers to whether the cloud vendor is financially stable, reliability of cloud vendor may refer to capability of the cloud service provider in consistently handling robust bandwidth and data exchange in uptime. Complexity of network connection and maintenance is a measure of the robustness, security, resilience and durability of the network used, in order to deliver reliable network connectivity through the cloud services with efficiency. Cloud exchange possibility is a measure of flexibility of exchange of cloud service from one cloud vendor to the other.

In an embodiment the other data 208 may include, but is not limited to, results of migrated applications and historical data of migrated applications. Results of migrated applications may indicate the results of applications which where migrated previously. Historical data of migrated applications may indicate the previous cloud to which a given application was migrated. The historical data may be used if the given application is to be migrated to a new cloud platform.

In an embodiment, the data 204 in the memory 202 is processed by modules 209 of the cloud assessment system 103. As used herein, the term module refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide the described functionality. The modules 209 when configured with the functionality defined in the present disclosure will result in a novel hardware.

In one implementation, the modules 209 may include, for example, a communication module 210, a feasibility assessment module 211, a target cloud determination module 212, a migration module 213 and other modules 214. It will be appreciated that such aforementioned modules 209 may be represented as a single module or a combination of different modules.

The communication module 210 facilitates communication between the cloud assessment system 103 and other units (not shown in figures). In an embodiment, the other units may comprise, but are not limited to, the application sources 101 and the cloud platforms 105. For example, the communication module 210 may receive the one or more applications 102 from the application sources 101. Further, after assessing each of the one or more applications 102, the cloud assessment system 103 migrates each of the one or more applications 102 to the target cloud. The migration may take place via the communication module 210. In an embodiment, the communication module 210 may help in communication between the other units.

In an embodiment, the feasibility assessment module 211, receives each of the one or more applications 102 as an input. Further, the feasibility assessment module 211 assesses the feasibility of each of the one or more applications 102 for migrating each of the one or more applications 102 into the cloud platforms 105. Further, each of the one or more applications 102 is evaluated for each of the migration requirements 206.Once each of the migration requirements 206 is evaluated, the feasibility assessment module 211 generates a decision for migrating each of the one or more applications 102 into the cloud platforms 105. Consider a first instance wherein, ten applications are received by the communication module 210. The feasibility assessment module 211 assess each of the ten applications for feasibility of migration based on the migration requirements. The feasibility assessment module 211 generates a positive result for six applications of the ten applications, i.e. six applications are feasible for migration into the cloud platforms 105. The remaining four applications may be migrated to non-cloud platforms or may not be suitable for migration to any platforms.

In an embodiment, the target cloud determination module 212 determines a target cloud from the one or more clouds 106, corresponding to each of the one or more applications 102, feasible for migration. Considering the first instance, the target cloud determination module 212 determines the target cloud from the one or more clouds 106 for each of the six applications determined to be feasible for migration. The application parameters 205 of each of the six applications is compared with the cloud parameters 207 of each of the one or more clouds 106. Suitable target cloud is determined for each of the six applications based on the comparison. In an embodiment, the target cloud determination module 212 may determine a non-cloud platform for the four applications which are determined to be non-feasible for migration to the one or more clouds 106. The non-cloud platforms may include, but are not limited to, individual servers and databases, and organization specific servers.

In an embodiment, the migration module 213 migrates each of the one or more applications 102 into the corresponding target cloud determined. The migration of each of the one or more applications 102 into the corresponding target cloud platform may be based on a migration technique. The migration technique comprises one of a rehost, a refactor, a revise, a rebuild and a replace. In case of the rehost technique, the migration module 213 re-deploys each of the one or more applications 102 to a different hardware environment and changes the infrastructure configuration of each of one or more applications 102. Rehosting an application without making changes to the architecture may provide a fast cloud migration solution. In case of the refactor technique, the migration module 213 runs each of the one or more applications 102 on an infrastructure of a cloud provider, without changing the infrastructure. In case of the revise technique, the migration module 213 modifies or extends the existing code base to support legacy modernization requirements and then use the rehost technique or the refactor technique options to deploy to the cloud platforms 105. The above-mentioned option allows organizations to optimize each of the one or more applications to leverage the cloud characteristics of infrastructure provided by the cloud service provider. In case of rebuild technique, the migration module 213 rebuilds the solution on PaaS, discards code for an existing application and re-architects the application. Furthermore, in case of replace technique, the migration module 213 discards an existing application (or set of applications) and use commercial software delivered as a service.

In an embodiment, the other modules 214 may include, but are not limited to, a monitoring module, a display module, and a feedback module. The monitoring module may monitor all the aspects of each of the one or more applications 102 deployed on the corresponding target cloud, detect issues and failure in the functioning of each of the one or more deployed applications, manually or automatically remediate issues, and perform ongoing maintenance tasks.

In an embodiment, the display module may be used to display the target cloud determined for each of the one or more applications. The display module may be one of, but not limited to, a monitor, a Liquid Crystal Display (LCD), a Light Emitting Diode (LED) display and/or any other module present which is capable of displaying an output.

In an embodiment, the feedback module may receive feedback from the cloud service providers, application owners and application users after the application is deployed on the target cloud.

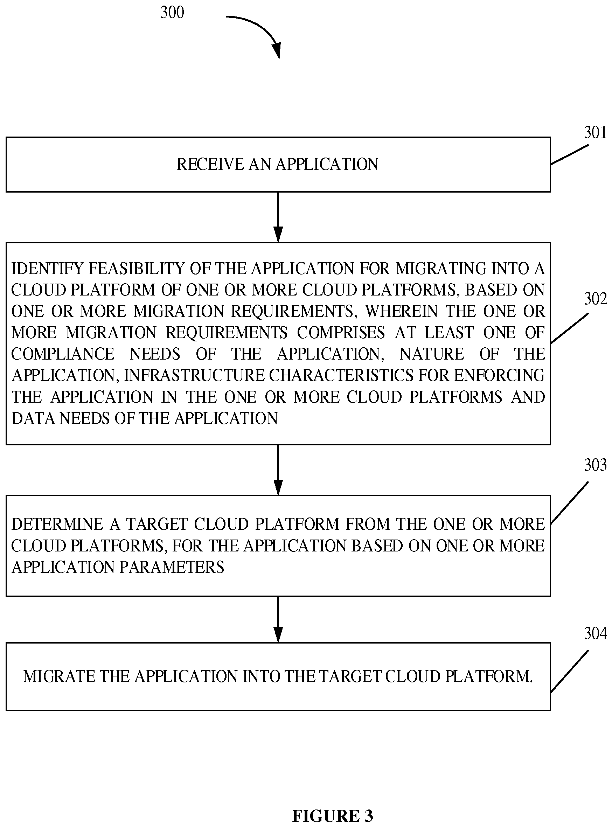

**Figure 3** shows an exemplary flow chart illustrating method steps 300 for migrating applications into cloud platforms, in accordance with some embodiments of the present disclosure;

As illustrated in Figure 3, the method 300 comprises one or more blocks for migrating applications into cloud platforms. The method 300 may be described in the general context of computer executable instructions. Generally, computer executable instructions may include routines, programs, objects, components, data structures, procedures, modules, and functions, which perform particular functions or implement particular abstract data types.

The order in which the method 300 is described is not intended to be construed as a limitation, and any number of the described method blocks may be combined in any order to implement the method. Additionally, individual blocks may be deleted from the methods without departing from the scope of the subject matter described herein. Furthermore, the method may be implemented in any suitable hardware, software, firmware, or combination thereof.

At step 301, the one or more applications 102 may be received by the communication module 210. In an embodiment, each of the one or more applications 102 may be retrieved from a database namely application sources 101.

At step 302, the feasibility assessment module 211, receives as an input each of the one or more applications 102. Further, the feasibility assessment module 211 assesses the feasibility of each of the one or more applications 102 for migrating each of the one or more applications 102 into the cloud platforms 105. Further, each of the one or more applications 102 is evaluated for each of the migration requirements 206. The migration requirements 206 may include, but are not limited to, at least one of compliance needs of the application, nature of the application, infrastructure characteristics for enforcing the application in the cloud platforms 105, data needs of the application and value of application. Upon, evaluating each of the migration requirements 206, the feasibility assessment module 211 generates a decision for migrating each of the one or more applications 102 into the cloud platforms 105.

Following are few instances of evaluating each of the one or more applications 102 for the one or more migration parameters. Each of the one or more applications 102 are evaluated for compliance needs. The compliance needs may include, but not limited to, data protection compliance, security compliance, possibility of achieving Recovery Time Objective (RTO) and Recovery Time Objective (RTO) and Geo or location specific compliances.

Each of the one or more applications 102 are evaluated for security compliance. Security compliance refers to a list of security parameters to be complied by each of the one or more applications 102 to be migrated to the cloud platforms 105. The cloud assessment system 103 checks whether each of the one or more applications 102 complies to security parameters. Consider a second instance, where the feasibility assessment module 211 checks whether a first application contains any government related data. The feasibility assessment module 211 may not allow such an application which contains highly secured data to be migrated to the cloud platforms 105. The feasibility assessment module 211 further evaluates whether the first application is old or mainframe type or single machine type so that user may use the application on a portable device. If the first application does not contain any secret data, then the feasibility assessment module 211 evaluates the first application for a next migration requirement.

Further, the feasibility assessment module 211 evaluates each of the one or more applications 102 for possibility of achieving RTO and RPO. Possibility of achieving RTO and RPO refers to whether each of the one or more applications 102 is capable achieving a certain level of RTO and RPO. Considering the above-mentioned instance, the first application is evaluated for possibility of achieving RTO and RPO. RTO is a measure of how fast a system can recover from a failure, in case of any disaster. RPO is a measure of the amount of data that can be lost and the cloud assessment system 103 is still able to function, in case of any disaster. For example, if RTO is 15 minutes for backup of data then, in case of failure, the system may lose 15 minutes data. In an example, consider the first application is a bank related application which requires a zero-loss data. The first application, being a bank related application, may need to maintain data related to banking on single server. The first application is thereby, not allowed to be migrated on the cloud platforms 105. If the first application passes this evaluation, then the feasibility assessment module 211 evaluates the first application for a next migration requirement.

Further, the feasibility assessment module 211 evaluates each of the one or more applications 102 for geo or location specific compliances. Geo or location specific compliances refers to a list of parameters specific to a geographical location. Considering an instance where the first application is devised in the Europe Union. The European union does not allow to migrate applications on cloud which includes details or data of the employees or citizens. Therefore, the first application may not be feasible for migration. If the first application does not include details or data of the employees or citizen, then the feasibility assessment module 211 may allow the migration of the first application. If the first application passes this evaluation, then the feasibility assessment module 211 evaluates the first application for a next migration requirement.

Further, the feasibility assessment module 211 evaluates each of the one or more applications 102 for the nature of application. The nature of application may include, but is not limited to, statelessness, stickiness with other upstream and downstream applications, horizontal scalability, check for Commercial Off-the-Shelf (COTS) products, hardcoding, availability of support for hosting the application on the one or more cloud platforms, dependency on hardware components, multi-user usability, and changeability of architecture. Horizontal scalability is the ability to scale wider with increase in traffic.

In an embodiment, considering the second instance, the feasibility assessment module 211 examines the first application for horizontal scalability. Horizontal scaling is the ability to scale wider to deal with data traffic. Horizontal scalability is the ability to connect multiple hardware or applications entities, such as servers, to work as a single logical unit. For example, when workload increases, the number of servers also increases to balance the load. In such cases, the feasibility assessment module 211 checks whether the first application has an ability for horizontal scaling. If the first application passes horizontal scalability check, then the feasibility assessment module 211 evaluates the first application for a next migration requirement.

In an embodiment, considering the second instance, the feasibility assessment module 211 examines whether the first application is of COTS products. Commercial products are capable of being transferred to cloud but if the code of some products is dependent on a few external factors then such product data cannot be transferred on the cloud. If the first application is of COTS, then the availability of support from the cloud service provider is checked for the first application. If vendor of the cloud platform supports the application, then the feasibility assessment module 211 checks whether the internal support team of an organization is ready to acknowledge the changes in the application for migration. After receiving an acknowledgement from the internal support team, the communication requirements for the first application is checked by the feasibility assessment module 211. for the first application. For example, bank transaction application requires single server for their operation. Such type of application is not allowed for migration on cloud. Further, the feasibility assessment module 211 includes evaluation for changeability of architecture. The feasibility assessment module 211 checks if the first application is x86 compatibility. x86 is a family of backward-compatible instruction set architectures. Further, the first application is evaluated for OS support. The feasibility assessment module 211 checks whether the first application supports the operating system such as Linux ™ or Windows ™. Some of the older version of operating systems are not compatible for migration of applications on the cloud. For example, IBM AIX ™ is only compatible with IBM ™ platform. In such cases, the application has to be changed according to the older version of the OS.

In an embodiment, the feasibility assessment module 211 includes evaluation of virtualization of the first application. Application virtualization allows applications to run in environments that do not suit the native application. For example, Wine allows some Microsoft^{R} Windows ™ applications to run on Linux ™. If the first application is virtualized, then the feasibility assessment module 211 evaluates for OS support. If the virtualized application does not support the OS, then the feasibility assessment module 211 searches for alternate of cloud to migrate the one or more applications. If the virtualized application supports the OS, then the feasibility assessment module 211 checks for proximity to the other non-cloud platform.

At step 303, upon evaluation of each of the one or more applications for each of the migration requirements 206, the target cloud determination system 212 determines a target cloud for selected applications of the one or more applications that satisfy each of the migration requirements 206. The target cloud determination module 212 compares the application parameters 205 of the selected applications with the cloud parameters 207 of each of the one or more clouds 106. Suitable target cloud is determined for each of the selected applications based on the comparison. In an embodiment, the target cloud determination module 212 may determine a non-cloud platform for the unselected applications of the one or more applications 102 which are determined to be non-feasible for migration to cloud platforms 105. The non-cloud platforms may include, but are not limited to, individual servers and databases, and organization specific servers.

In an embodiment, the target cloud determination module may choose a target cloud for a given application based on the comparison between application parameters of the given application with the cloud parameters 207 of each of the one or more clouds 106. The cloud parameters 207 may include, but are not limited to, type of cloud services offered, pricing of cloud vendor, expertise of the cloud service provider, reliability of cloud vendor, financial stability of cloud vendor, terms and conditions of cloud vendor, ease of application hosting on the same platform, complexity of network connection and maintenance, cloud exchange possibility, restriction of cloud vendor to communicate with other cloud vendor and the like.

In an embodiment, type of cloud service may be one of SaaS, PaaS and IaaS. Pricing of cloud vendor ensures that pricing of the cloud vendor is according to the pricing decided by the organization. Thus, a target cloud which offers flexible pricing and allows to scale up and scale down according to organizational IT needs may be chosen.

In an embodiment, expertise of the cloud service provider may be one of the cloud parameters considered for choosing a target cloud or a cloud service provider. The target cloud hosted by a cloud service provider, where the cloud service provider is an industry expert and is an established brand that is familiar with almost any software that is used in the organization may be chosen.

In an embodiment, reliability of cloud vendor may be one of the cloud parameters considered for choosing a target cloud or a cloud service provider. Reliability of cloud vendor may refer to capability of the cloud service provider in consistently handling robust bandwidth and data exchange in uptime. A cloud service provider with a reliable hosting provider that can manage the entire hosting environment, especially when the website of an organization receives robust traffic in uptime, may be chosen.

In an embodiment, financial stability of cloud vendor may be one of the cloud parameters considered for choosing a target cloud or a cloud service provider. The number of years of experience of the cloud service provider and position of the target cloud in the market may be significant factors to considered.

In an embodiment, terms and conditions of cloud vendor may be one of the cloud parameters considered for choosing a target cloud or a cloud service provider. The terms and conditions of a given target cloud that comply with the terms and conditions of a given application may be chosen as a target cloud.

In an embodiment, ease of application hosting on the same platform may be one of the cloud parameters considered for choosing a target cloud or a cloud service provider. The cloud service provider having an easy management system for the IT (Information Technology) staff to manage, control and maintain the cloud platform with efficiency and simplicity may be chosen.

In an embodiment, complexity of network connection and maintenance may be one of the cloud parameters considered for choosing a target cloud or a cloud service provider. Complexity of network connection and maintenance is a measure of the robustness, security, resilience and durability of the network used, in order to deliver reliable network connectivity through the cloud services with efficiency. A target cloud which meets the above requirements may be chosen.

At step 304, the migration module 213 migrates each of the one or more applications 102 into the corresponding target cloud determined. The migration of each of the one or more applications 102 into the corresponding target cloud platform may be based on a migration technique. The migration technique comprises one of a rehost, a refactor, a revise, a rebuild and a replace. In case of the rehost technique, the migration module 213 re-deploys each of the one or more applications 102 to a different hardware environment and change the infrastructure configuration of each of one or more applications 102. Rehosting an application without making changes to the architecture may provide a fast cloud migration solution. In case of the refactor technique, the migration module 213 runs each of the one or more applications 102 on an infrastructure of a cloud provider, without changing the infrastructure. In case of the revise technique, the migration module 213 modifies or extends the existing code base to support legacy modernization requirements and then use the rehost technique or the refactor technique options to deploy to the cloud platforms 105. The above-mentioned option allows organizations to optimize each of the one or more applications to leverage the cloud characteristics of infrastructure provided by the cloud service provider. In case of rebuild technique, the migration module 213 rebuilds the solution on PaaS, discards code for an existing application and re-architects the application. Furthermore, in case of replace technique, the migration module 213 discards an existing application (or set of applications) and use commercial software delivered as a service.

In an embodiment, one or more methods employed for migrating the application on basis of the type of cloud service comprises at least one of rehost on IaaS, refactor for PaaS, revise for one of IaaS and PaaS, rebuild on PaaS and replace with SaaS.

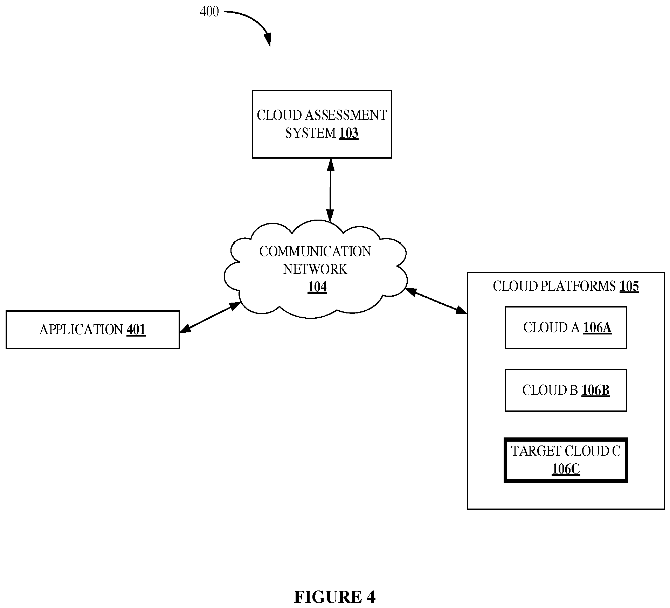

**Figure 4** shows a block diagram 400 illustrating application and target clouds for migrating applications into cloud platforms, in accordance with some embodiments of the present disclosure.

Referring to **Figure 4****,** the block diagram 400 comprises an application 401, the communication network 104, the cloud assessment system 103 and the cloud platforms 105. The cloud platforms 105 comprises of three clouds a cloud A 106A, a cloud B 106B and a cloud C 106C determined for the application 401.

The application 401 is received by the cloud assessment system 103. The cloud assessment system 103 evaluates the application 401 for each of the migration requirements 206 and determines the feasibility of the application 401 to be migrated into the cloud platforms 105. Upon, determining that the application 401 satisfies each of the migration requirements 206, the cloud assessment system 103 determines a target cloud for the application 401 in the cloud platforms 105. The cloud assessment system 103 provides a list of three clouds, cloud A 106A, cloud B 106B and cloud C 106C suitable for migrating the application 401. The cloud assessment system 103 compares the application parameters 205 of the application 401 with the cloud parameters of each of the clouds in the cloud platforms 105 to determine which of the three clouds is suitable for migrating the application 401. Further, the cloud assessment system 103 determines the target cloud among the three-clouds for migration. The cloud C 104C is determined as the target cloud based on evaluation. Upon determining the cloud C 104C as the target cloud, the cloud assessment system 103 migrates the application 401 to the Cloud C 104C via the communication network 104.

### Computer System

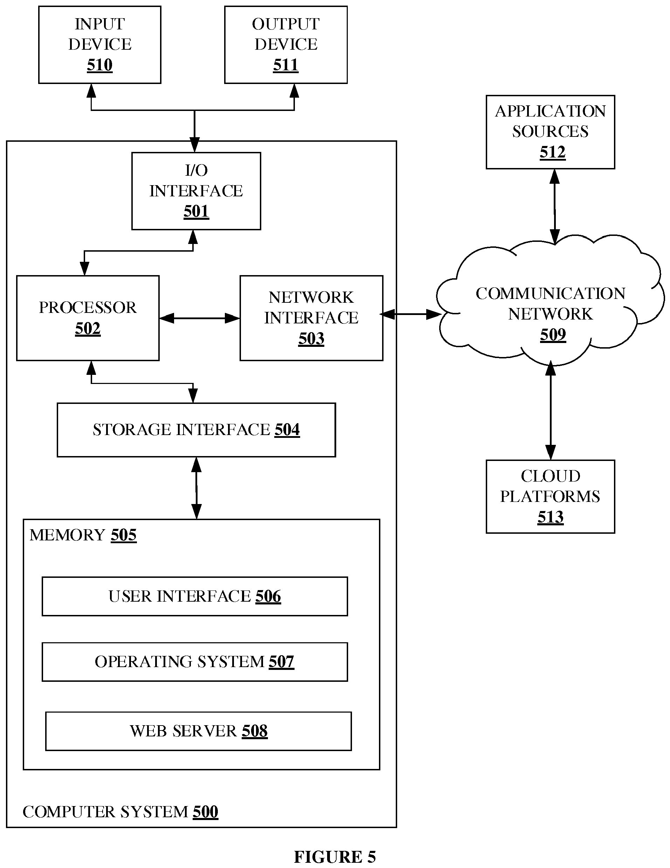

**Figure 5** illustrates a block diagram of an exemplary computer system 500 for implementing embodiments consistent with the present disclosure. In an embodiment, the computer system 500 is used to implement the cloud assessment system 103. The computer system 500 may comprise a central processing unit ("CPU" or "processor") 502. The processor 502 may comprise at least one data processor for executing program components for migrating the applications into cloud platforms. The processor 502 may include specialized processing units such as integrated system (bus) controllers, memory management control units, floating point units, graphics processing units, digital signal processing units, etc.

The processor 502 may be disposed in communication with one or more input/output (I/O) devices (not shown) via I/O interface 501. The I/O interface 501 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 501, the computer system 500 may communicate with one or more I/O devices. For example, the input device 510 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 511 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 500 is connected to the application sources 512 and the cloud platforms 513 through a communication network 509. The processor 502 may be disposed in communication with the communication network 509 via a network interface 503. The network interface 503 may communicate with the communication network 509. The network interface 503 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 509 may include, without limitation, a direct interconnection, local area network (LAN), wide area network (WAN), wireless network (e.g., using Wireless Application Protocol), the Internet, etc. Using the network interface 503 and the communication network 509, the computer system 500 may communicate with the application sources 512 and the cloud platforms 513. The network interface 503 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 509 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 502 may be disposed in communication with a memory 505 (e.g., RAM, ROM, etc. not shown in figure 7) via a storage interface 504. The storage interface 504 may connect to memory 505 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 505 may store a collection of program or database components, including, without limitation, user interface 506, an operating system 507, web server 508 etc. In some embodiments, computer system 500 may store user/application data 506, such as, the data, variables, records, etc., as described in this disclosure. Such databases may be implemented as fault-tolerant, relational, scalable, secure databases such as Oracle ® or Sybase®.

The operating system 507 may facilitate resource management and operation of the computer system 500. Examples of operating systems include, without limitation, APPLE MACINTOSH^{R} OS X, UNIX^{R}, UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™ OS/2, MICROSOFT™ WINDOWS™ (XP™, VISTA™/7/8, 10 etc.), APPLE^{R} IOS™, GOOGLE^{R} ANDROID™, BLACKBERRY^{R} OS, or the like.

In some embodiments, the computer system 500 may implement a web browser 508 stored program component. The web browser 508 may be a hypertext viewing application, for example MICROSOFT^{R} INTERNET EXPLORER™, GOOGLE^{R} CHROME^{TM0}, MOZILLA^{R} FIREFOX™, APPLE^{R} SAFARI™, etc. Secure web browsing may be provided using Secure Hypertext Transport Protocol (HTTPS), Secure Sockets Layer (SSL), Transport Layer Security (TLS), etc. Web browsers 508 may utilize facilities such as AJAX™, DHTML™, ADOBE^{R} FLASH™, JAVASCRIPT™, JAVA™, Application Programming Interfaces (APIs), etc. In some embodiments, the computer system 500 may implement a mail server stored program component. The mail server may be an Internet mail server such as Microsoft Exchange, or the like. The mail server may utilize facilities such as ASP™, ACTIVEX™, ANSI™ C++/C#, MICROSOFT^{R}, .NET™, CGI SCRIPTS™, JAVA™, JAVASCRIPT™, PERL™, PHP™, PYTHON™, WEBOBJECTS™, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 500 may implement a mail client stored program component. The mail client may be a mail viewing application, such as APPLE^{R} MAIL™, MICROSOFT^{R} ENTOURAGE™, MICROSOFT^{R} OUTLOOK™, MOZILLA^{R} THUNDERBIRD™, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated method of **Figure 3** shows certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

In an embodiment, the system and method as disclosed in the present disclosure, may be used in real-time for migrating applications to cloud platforms.

In an embodiment, the system and method as disclosed in the present disclosure, may provide a fact driven decision making, as a series of filtering mechanism are used for automated migration of applications to the cloud platforms.

In an embodiment, the system and method as disclosed in the present disclosure, reduces effort of both customer and cloud service provider to take the decision of migrating the applications to the cloud platforms.

In an embodiment, the system and method as disclosed in the present disclosure, renders a cost-effective framework and a standardized, unified framework for any type of cloud platforms and performs automated fast decision making.

In an embodiment, the system and method as disclosed in the present disclosure, reduces the dependency of the consultant's capability, knowledge background and experience for taking the decision of migrating the applications to the cloud platforms.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for migrating an application into a cloud platform, comprising:
receiving, by a cloud assessment system, an application;
identifying, by the cloud assessment system, feasibility of the application for migrating into a cloud platform of one or more cloud platforms, based on migration requirements, wherein the migration requirements comprise at least one of compliance needs of the application, a nature of the application, infrastructure characteristics for enforcing the application in the one or more cloud platforms and data needs of the application;
determining, by the cloud assessment system, a target cloud platform from the one or more cloud platforms, for the application based on one or more application parameters; and
migrating, by the cloud assessment system, the application into the target cloud platform.

2. The method as claimed in claim 1, wherein the compliance need of the application comprises at least one of compliance to data protection, compliance to security parameters, availability of recovery point objective and/or recovery time objective, and location specific compliances.

3. The method as claimed in claim 1 or claim 2, wherein the nature of the application comprises at least one of horizontal scalability, a check for commercial off-the-shelf, an availability of support for hosting the application on the one or more cloud platforms, a dependency on hardware components, multi-user usability, and changeability of architecture.

4. The method as claimed in any of the preceding claims, wherein the infrastructure characteristics for enforcing the application in the one or more cloud platforms comprises at least one of operating system support, database support, custom hardware, need for latency, storage input/output operations per second need, hardcoded Internet protocol addressing and hardcoded authentication.

5. The method as claimed in any of the preceding claims, wherein the data needs of the application comprises at least one of an amount of data and data flow direction, access of data from a remote location and a content delivery technology need.

6. The method as claimed in any of the preceding claims, wherein the application parameters comprise at least one of proximity of a cloud data center, functions and features available, an approximate operational cost with long term cost projection, ease of application hosting on a given platform, complexity of network connection and maintenance, cloud exchange possibility, restriction of cloud vendor to communicate with another cloud vendor and a type of cloud service.

7. The method as claimed in claim 6, wherein the type of cloud service is one of software as a service, infrastructure as a service and platform as a service.

8. The method as claimed in any of the preceding claims, wherein migrating the application into the target cloud platform is performed using a migration technique, wherein the migration technique comprises one of rehost, refactor, revise, rebuild and replace.

9. The method as claimed in claim 8, wherein one or more methods employed for migrating the application on basis of the type of cloud service comprises at least one of rehost on infrastructure as a service, refactor for platform as a service, revise for one of infrastructures as a service and platform as a service, rebuild on platform as a service and replace with software as a service.

10. A cloud assessment system for migrating applications into cloud platforms, the cloud assessment system comprising:
a processor; and
a memory, communicatively coupled with the processor, storing processor executable instructions, which, on execution causes the cloud assessment system to perform the method of any of the preceding claims.

11. A computer readable medium including instructions stored thereon that when processed by at least one processor cause a cloud assessment system to perform the method of any of claims 1 to 9.

12. A computer program product comprising instructions that, when executed by a computer, cause the computer to perform a method in accordance with any of claims 1 to 9.
